# FASCICULE DE BREVET EUROPEEN

(11) **EP 1 132 232 B1**
(45) Date de publication et mention de la délivrance du brevet: **17.09.2008**
(21) Numéro de dépôt: 01105283.4
(22) Date de dépôt: 05.03.2001
(51) Int. Cl.: B60H 1/34, B60H 1/24

(54) **Installation de chauffage et/ou climatisation présentant au moins une sortie de dégivrage**
Heiz-und/oder Klimatisierungsvorrichtung mit mindestens einem Auslass zur Enteisung
Heat and/or air conditioning device with at least one outlet for defrosting

(30) Priorité: 06.03.2000 FR 0002831
(43) Date de publication de la demande: 12.09.2001
(73) Titulaire: VALEO SYSTEMES THERMIQUES, 78321 Le Mesnil St Denis Cedex (FR)
(72) Inventeur: Elliot, Gilles, 91080 Courcouronnes (FR); Paumier, Carine, 78000 Versailles (FR); Foury, Guillaume, 78990 Elancourt (FR)
(74) Mandataire: Léveillé, Christophe

(56) Documents cités:
- EP-A- 0 713 792
- DE-A- 19 801 979
- GB-A- 1 341 953

## Description

La présente invention a pour objet une installation de chauffage et/ou climatisation présentant au moins une sortie de dégivrage comportant au moins une ouverture proche d'un vitrage, par exemple le pare-brise du véhicule, et au moins un élément de diffusion d'air à faible débit surfacique ainsi qu'au moins un dispositif de répartition d'air entre au moins une sortie de dégivrage et au moins un dit élément de diffusion d'air.

Un tel dispositif, destiné au pare-brise et au tableau de bord d'un véhicule, est connu de la demande de Brevet Européen EP 713 792 publiée le 29 Mai 1996. La répartition d'air y est assurée par volet.

Selon cette demande de Brevet, il est prévu deux éléments de diffusion d'air situés de part et d'autre de la console du véhicule, et ces éléments comportent des surfaces présentant un grand nombre de trous avec une densité élevée par unité de surface de manière à réaliser une diffusion d'air à faible débit surfacique et à faible vitesse de sorte que les passagers du véhicule ne ressentent pas comme tel le déplacement de l'air, ce qui permet de chauffer et/ou climatiser le véhicule tout en assurant un confort des passagers. Ces surfaces perforées sont par exemple réalisées à partir d'un matériau plastique ou élastomère à structure cellulaire ouverte ou bien à partir d'une structure présentant des ouvertures traversantes de faible diamètre ou des micro trous. On peut également mettre en oeuvre une feuille perforée.

Un volet de répartition commande par tout ou rien le passage de l'air soit dans un canal de dégivrage du pare-brise, soit à travers les éléments de diffusion d'air ménagés à la partie supérieure du tableau de bord.

Or, le conduit de dégivrage occupe une certaine surface de la planche de bord alors même qu'elle n'est utilisée qu'une fraction relativement faible du temps uniquement pour dégivrer ou désembuer le pare-brise.

L'idée de base de l'invention est de mettre à profit la surface de la ou des sorties de dégivrage pour réaliser une diffusion à faible débit surfacique, de manière à renforcer l'efficacité de cette diffusion et/ou de diminuer la surface totale des ouvertures de la planche de bord.

Dans ce but, et selon un premier aspect, l'invention concerne une installation de chauffage et/ou climatisation comportant au moins une région de dégivrage présentant notamment au moins une ouverture de dégivrage ménagée dans une paroi du véhicule, et proche d'un vitrage, et au moins une région de diffusion d'air à faible débit surfacique, notamment un élément de diffusion d'air fixe par rapport à ladite paroi du véhicule, ainsi qu'au moins un élément de répartition d'air entre au moins une région de dégivrage et au moins une dite région de diffusion d'air, caractérisé en ce qu'au moins un dit élément de répartition d'air, par exemple un volet, présente au moins deux positions, à savoir :
- une première position dans laquelle il obture l'alimentation en air d'au moins une région de diffusion d'air pour assurer un dégivrage et/ou désembuage du vitrage, par exemple un pare-brise,
- une deuxième position dans laquelle il obture partiellement l'alimentation en air d'au moins une dite région de dégivrage de sorte que le débit surfacique à travers au moins une région de dégivrage corresponde à une diffusion à faible débit surfacique, de sorte qu'à la fois au moins une région de dégivrage et au moins une région de diffusion d'air réalisent une diffusion d'air à faible débit surfacique.

L'obturation partielle d'une ou plusieurs sorties de dégivrage par un ou plusieurs éléments d'orientation, par exemple des volets, procure un flux d'air additionnel à faible débit qui, s'il n'a pas les propriétés recherchées pour une diffusion d'air multi-points à faible débit surfacique dite « diffusion douce » dont le principe est décrit dans l'art antérieur précité, ne présente pas cependant d'inconvénient, car, ce flux d'air additionnel jouxte un flux de diffusion d'air principal fourni par une ou plusieurs régions de diffusion d'air. Le mélange entre ces deux flux s'effectue donc de manière homogène et sans que les passagers puissent percevoir comme tel le déplacement de l'air. En particulier, dans le cas où le flux additionnel est généré entre le flux principal et le vitrage, ou bien dans le cas où le flux additionnel est entouré par le flux principal, ce flux d'air principal généré en une multitude de points forme écran pour le flux d'air additionnel. En d'autres termes, on conserve tous les avantages d'une diffusion d'air à faible débit surfacique à travers une surface présentant de nombreuses ouvertures de petite taille et/ou une surface poreuse.

Il est avantageux que, dans la deuxième position du ou des éléments de répartition d'air, ladite diffusion d'air par au moins une région de dégivrage présente un débit surfacique sensiblement égal au débit surfacique d'au moins un élément de diffusion d'air précité.

Au moins un élément de répartition peut présenter également une troisième position dans laquelle il obture au moins une région de dégivrage.

Au moins une région de dégivrage peut être une ouverture dans une paroi interne du véhicule, et au moins une région de diffusion d'air peut être un élément de diffusion d'air fixe par rapport à une dite paroi du véhicule.

Au moins un élément de diffusion d'air peut longer au moins une sortie de dégivrage sur au moins une partie de sa longueur.

Au moins un élément de répartition d'air peut être un volet de répartition d'air articulé autour d'un axe situé sur une ligne de jonction entre au moins une sortie de dégivrage et au moins un élément de diffusion d'air.

Le but précité est également atteint par l'invention selon son deuxième aspect, lequel concerne une installation de chauffage et/ou climatisation comportant au moins une région dite de dégivrage proche d'un vitrage et au moins une région de diffusion d'air à faible débit surfacique, ainsi qu'au moins un élément de répartition d'air entre au moins une région de dégivrage et au moins une région de diffusion d'air et qui présente au moins une première position d'obturation d'au moins une région de diffusion d'air et au moins une deuxième position d'obturation d'au moins une région de dégivrage, caractérisée en ce qu'au moins un élément de répartition d'air, par exemple un volet, est perforé et/ou poreux, de sorte que, lorsqu'il est placé dans ladite deuxième position d'obturation d'au moins une région de dégivrage qui jouxte au moins une région de diffusion d'air, le débit surfacique à travers au moins une région de dégivrage corresponde à un faible débit surfacique, de sorte qu'au moins une région de dégivrage et au moins une région de diffusion d'air réalisent une diffusion d'air à faible débit surfacique.

Selon ce deuxième aspect de l'invention, lorsqu'au moins un élément de répartition obture au moins un élément de dégivrage, il jouxte au moins une région de diffusion d'air et, se trouvant dans le prolongement de celui-ci, l'ensemble de la surface des ouvertures ainsi ménagées par exemple, à la face supérieure du tableau de bord, concourent à une diffusion d'air multi-points à faible débit surfacique dite « diffusion douce » et donc au confort recherché pour les passagers.

Il est avantageux que, lorsqu'au moins un élément de répartition d'air est placé dans ladite deuxième position d'obturation, le débit surfacique à travers au moins un dit élément de répartition d'air soit sensiblement égal au débit surfacique à travers au moins un élément de diffusion d'air.

Au moins une région de dégivrage peut être une ouverture ménagée dans une paroi interne du véhicule, et au moins une région de diffusion d'air peut être un élément de diffusion d'air fixe par rapport à ladite paroi.

Au moins un élément de diffusion d'air peut longer au moins une sortie de dégivrage sur au moins une partie de sa longueur.

Au moins un élément de répartition d'air peut être un volet de répartition d'air.

Au moins un volet de répartition d'air peut être articulé autour d'un axe situé sur une ligne de jonction entre au moins une sortie de dégivrage et au moins un élément de diffusion d'air.

Au moins un élément de répartition d'air peut être déplaçable par translation en face des dites régions de dégivrage et de diffusion d'air. Dans ce cas, il peut également porter une ou plusieurs ouvertures et/ou une ou plusieurs zones de diffusion d'air à faible débit surfacique qui viennent ainsi se positionner aux endroits désirés, par translation d'au moins un élément de répartition d'air.

L'installation peut être alors caractérisée en ce qu'au moins un élément de répartition d'air présente :
- au moins une ouverture correspondant au contour d'au moins une région de dégivrage pour assurer un dégivrage et/ou désembuage ;
- au moins une zone de diffusion d'air à faible débit surfacique pour assurer une diffusion à faible débit surfacique à travers au moins une région de diffusion d'air et/ou au moins une région de dégivrage.

Elle peut être également caractérisée en ce que l'élément de répartition d'air présente au moins une zone non perméable ménagée entre au moins une ouverture et au moins une dite zone de diffusion d'air.

L'élément de répartition d'air, déplaçable par translation, est de préférence un film couplé à des rouleaux de distribution pour permettre ledit déplacement.

D'une manière générale, l'invention permet de déplacer la gestion de la distribution de l'air vers le module de diffusion, ce qui permet ainsi la mise en oeuvre d'un conduit commun d'aération/dégivrage/ désembuage, et donc de section réduite, entre l'appareil de chauffage/climatisation proprement dit et le module de diffusion.

Au moins une région de dégivrage peut être disposée entre au moins un élément de diffusion d'air et le vitrage, ou être entourée par au moins un élément de diffusion d'air.

Au moins un élément de diffusion d'air peut être disposé entre au moins une région de dégivrage et ledit vitrage.

D'autres caractéristiques et avantages de l'invention apparaîtront mieux à la lecture de la description qui va suivre, donnée à titre d'exemple non limitatif, en liaison avec les dessins dans lesquels :
- la figure 1 illustre l'invention sous son premier aspect ;
- les figures 2 à 4 illustrent le deuxième aspect, préféré, de l'invention, la figure 2 étant un schéma général du dispositif vue en coupe longitudinale, les figures 3 et 4 illustrant les positions respectivement de dégivrage et d'aération obtenues par déplacement du volet d'orientation ;
- la figure 5 illustre une variante de l'invention mettant en oeuvre un volet de type tambour ;
- les figures 6a et 6b illustrent respectivement en coupe et en vue de dessus, un mode de réalisation de l'invention selon lequel au moins un élément de répartition d'air est un film, dont un mode de réalisation est illustré en relation avec les figures 7a à 7d.
- et les figures 8 et 9 illustrent deux variantes de disposition des régions de dégivrage/désembuage et de diffusion surfacique.

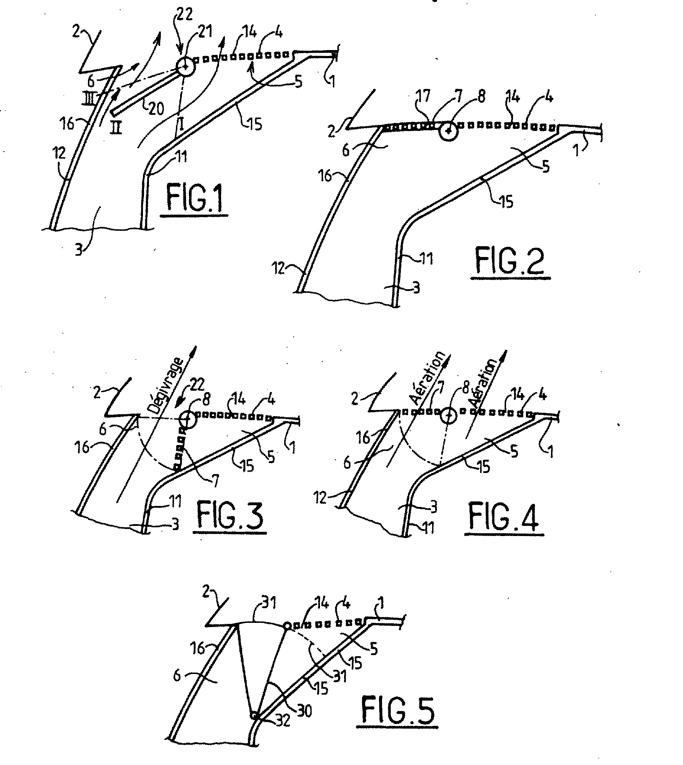

Selon la figure 1, le dispositif comporte une arrivée d'air 3 susceptible de véhiculer de l'air chaud pour le dégivrage et/ou le désembuage d'un vitrage 2, ou bien pour le chauffage de l'habitacle ou bien de l'air froid pour la climatisation de l'habitacle. Ce canal est délimité par des parois 11 et 12 qui s'évasent en 15 et 16 pour alimenter un module de diffusion comportant une sortie 6 de diffusion forcée, située au voisinage d'un vitrage 2, en particulier le pare-brise du véhicule, ainsi qu'un élément de diffusion d'air à faible débit surfacique comportant par exemple une plaque 4 présentant un grand nombre d'ouvertures 14 de petite dimension (par exemple 1 mm²). La sortie 6 présente une ou plusieurs ouvertures de grandes dimensions (par exemple 1 cm² ou plus). Dans le cas d'un pare-brise, le repère 1 désigne la planche de bord, alors que dans le cas d'une aération et/ou d'un dégivrage (ou désembuage) d'un vitrage latéral 2, le repère 1 désigne le bord interne de la portière. Un volet 20 de type drapeau, articulé en 21 à la jonction 22 entre l'élément 5 et la sortie 6 est déplaçable entre des positions extrêmes I et éventuellement III, dans laquelle il obture respectivement la sortie d'aération 5 et la sortie de dégivrage 6. Le volet 20 présente une position intermédiaire prédéterminée II dans laquelle il obture partiellement la sortie 6 de manière à ce que son débit surfacique soit compatible avec le débit surfacique d'une diffusion d'air à faible débit surfacique telle que mentionné dans l'art antérieur précité. En particulier, le débit surfacique ainsi obtenu sera par exemple compris entre 0,5 fois et deux fois le débit surfacique de la sortie d'aération 5 et elle lui sera préférentiellement sensiblement égale.

Du fait que, par construction, la surface dévolue à l'aération par la ou les sorties 5 est nettement supérieure à la surface dévolue au dégivrage par la ou les sorties 6, et du fait que la ou les sorties 6 sont situées entre la ou les sorties d'aération 5 et le vitrage 2, le mélange des flux d'air s'effectue dans des conditions telles que le passager ne perçoit pas comme tel le flux d'air à faible débit émis à la position II du volet 20 par les sorties de dégivrage 6. En effet, un faible débit surfacique émis par une large ouverture n'est pas perçu de la même façon qu'un faible débit surfacique émis par un élément tel que l'élément 4, qui est pourvu d'une multitude de trous qui communiquent directement avec l'habitacle. Dans la géométrie représentée, l'émission à faible débit surfacique par la ou les sorties 5 masque en quelque sorte les effets du flux sortant par la ou les sorties 6, et les flux se mélangent ainsi sans que les passagers du véhicule ne sentent les déplacements d'air d'aération, que ce soit en chauffage, ou en climatisation.

Dans le mode de réalisation représenté aux figures 2 à 4, le volet 7 présente des ouvertures 17 qui sont par exemple réparties de la même façon que les ouvertures 14 du ou des éléments 4. A la première position représentée à la figure 3, le volet 7 de type drapeau obture la sortie 5 et l'essentiel du flux traverse la sortie de dégivrage pour dégivrer le vitrage 2, par exemple le pare-brise du véhicule. En effet, la perte de charge qu'entraîne le passage de l'air à travers les ouvertures du volet 7, puis du ou des éléments 4, est tellement supérieure à la très faible perte de charge dans le sens direct que pratiquement la totalité de l'air est affectée au dégivrage à travers l'ouverture 6.

Dans la position présentée à la figure 4, le volet 7 est pratiquement en alignement avec le ou les éléments 4 et la section de passage d'air pour le dégivrage est intégrée à la section de passage d'air de l'aération.

Ceci permet comme dans le cas de la figure 1 un gain en surface de diffusion sur la planche de bord et/ou sur les côtés du véhicule, ainsi qu'un gain en volume puisque le dispositif présente un même conduit 3 pour alimenter le dégivrage et l'aération.

Dans le mode de réalisation de la figure 5, le volet 30 est du type tambour et est articulé en 32 sur la paroi 11 et sa face d'obturation 31, perforée ou non, vient occuper deux positions d'obturation soit de la sortie 6 de dégivrage comme représenté en traits pleins, soit de la sortie 5 d'aération comme représenté en pointillés, ou bien une position intermédiaire.

Le dispositif selon l'invention permet ainsi avec au minimum un volet de réaliser deux modes de diffusion d'air selon deux types de diffusion d'air (diffusion forcée, et diffusion répartie ou diffusion douce).

En mode aération (chauffage et/ou climatisation), la diffusion répartie est effectuée en utilisant toute la section disponible. En mode dégivrage ou désembuage, on n'utilise que la section égale à la taille du volet.

L'invention ne se limite pas aux modes de réalisation décrits et représentés ci-dessus. Il peut y avoir plusieurs volets 20 et/ou 30, ainsi que plusieurs ouvertures 5 et/ou 6.

Le vitrage 2 peut être également la lunette arrière du véhicule.

Les modes de réalisation décrits ci-dessus mettent en oeuvre des éléments de répartition d'air qui sont des volets, par exemple de type drapeau ou de type tambour.

L'invention ne se limite pas à la mise en oeuvre d'éléments rotatifs.

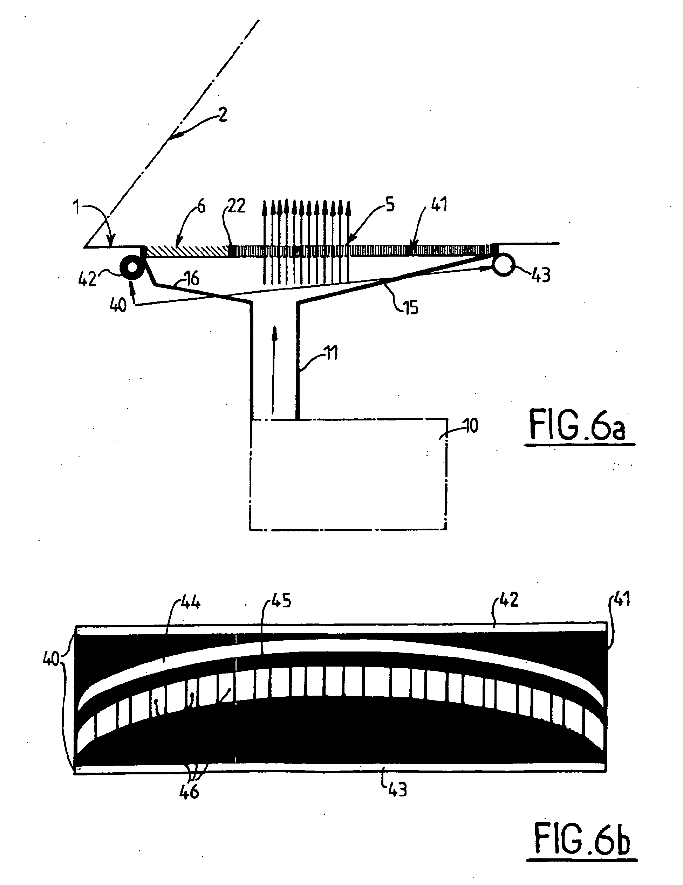

Dans le cadre de la présente invention, les éléments de répartition d'air peuvent également réaliser la fonction recherchée en étant animés d'un mouvement de translation, soit que, comme dans le cas des exemples précités, le ou les éléments de répartition d'air fonctionnent à la manière de volets, soit que, comme maintenant décrit en relation avec les figures 6a et 6b, le ou les éléments de répartition d'air sont des films qui portent les ouvertures de fourniture d'air, soit par diffusion forcée (ouvertures larges), soit par diffusion multi-points à faible débit surfacique (petites ouvertures ou surfaces (s) perméables)

Selon les figures 6a et 6b, la répartition d'air est assurée par un ou plusieurs films 41 placés sous les zones de diffusion d'air 5 et 6. Le film 1 est enroulé sur deux axes parallèles 42 et 43, dont l'un 42 est situé près du vitrage 2, par exemple près du pied du pare-brise du véhicule, et dont l'autre 43 est espacé du vitrage, et par exemple disposé en partie centrale de la planche de bord. Un enrouleur 40 présente un micro-moteur placé à l'extrémité d'un des axes 42, 43 et un tendeur est disposé sur l'autre axe 43, 42, de manière à maintenir le film constamment tendu et à autoriser son mouvement dans les deux directions d'enroulement et de déroulement.

Le film présente une ou plusieurs ouvertures de diffusion forcée 44, pour assurer la fonction dégivrage à travers la zone 6, et au moins une zone de perméabilité contrôlée 46 pour assurer une diffusion à faible débit surfacique à travers la zone 5 et/ou 6.

Par exemple, dans une première position du film 41, la position de l'ouverture 44 correspond à la zone de dégivrage 6 pour assurer la fonction dégivrage et/ou désembuage, alors qu'une région non perméable 45 du film obture la zone 5.

Dans une deuxième position du film, la région 45 obture la zone 6 et la région 46 assure une diffusion à faible débit surfacique à travers la zone 6.

Enfin, dans une troisième position du film 41, la région 46 occupe les zones 5 et 6 pour assurer une diffusion à faible débit surfacique à travers les zones 5 et 6.

On notera qu'à la figure 6a, on a matérialisé les zones 5 et 6 comme étant séparées physiquement par une élément de séparation 22. On comprendra que cet élément 22 peut être omis, et que la diffusion d'air (forcée et/ou à faible débit surfacique) peut s'effectuer à travers une grande ouverture, les zones 5 et 6 étant définies par la position du film 41. Ceci permet de faire varier dans une certaine mesure la dimension de ces zones, en particulier la zone de dégivrage 6, en fonction de la position du film 41.

A l'arrêt du véhicule, le film 41 peut être positionné de manière à étancher les zones 5 et 6 de diffusion pour y éviter le dépôt de poussières.

II est possible d'effectuer la gestion droite/gauche de la diffusion de l'air en mettant en oeuvre deux films.

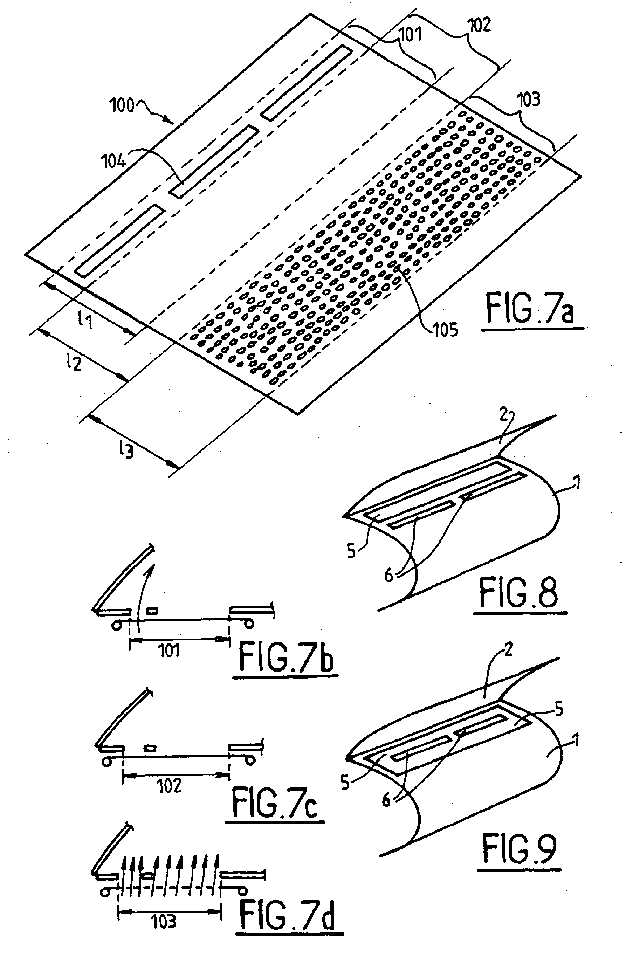

La figure 7a représente en développé, un film 100 qui présente trois bandes 101, 102, et 103 de longueurs respectives 11, 12, et 13. Elles correspondent respectivement au mode dégivrage (figure 7b) grâce aux ouvertures 104 situées en face de la ou des ouvertures 6, à la fonction d'obturation complète des régions 5 et 6 (figure 7c) grâce à la zone non perméable 102, et enfin à une « diffusion douce » à travers les régions 5 et 6 grâce à la zone perméable 103 qui présente par exemple de multiples ouvertures de faible dimension 105 pour assurer une diffusion répartie à faible débit surfacique.

Dans tous les cas décrits ci-dessus, la région (ou les régions) de diffusion répartie 5 peut être située en arrière de la ou des régions de dégivrage/désembuage 6 (comme représenté aux figures précédentes) ou bien devant la ou les régions 6 (figure 8). Elle peut être également située de part et d'autre de régions 6 ou bien être entourée par une ou plusieurs régions 5 (figure 9). En raison de l'inclinaison de plus en plus prononcée des pare-brises des nouveaux véhicules, il est possible, voire nécessaire, de reculer les buses de dégivrage pour une meilleure efficacité du désembuage et du dégivrage, ce qui libère de la place à la base du pare-brise, que la présente invention permet d'exploiter.

## Revendications

1. Installation de chauffage et/ou climatisation comportant au moins une sortie de dégivrage (6) présentant au moins une région de dégivrage (6) jouxtant au moins une région de diffusion d'air à faible débit surfacique (4), ainsi qu'au moins un élément de répartition d'air (7, 30, 31) entre la région de dégivrage (6) et la région de diffusion d'air (4),
l'élément de répartition d'air (7, 30, 31) présentant au moins deux positions, à savoir :
une première position (I) dans laquelle il obture l'alimentation en air de la région de diffusion d'air (4) pour assurer un dégivrage et/ou désembuage d'un vitrage (2),
- une deuxième position (II), **caractérisée en ce que**, dans la deuxième position (II), l'élément de répartition d'air (7, 30, 31) obture partiellement l'alimentation en air le la région de dégivrage (6) de sorte que le débit surfacique à travers la région de dégivrage (6) corresponde à une diffusion à faible débit surfacique, tout en assurant un diffusion d'air à faible débit surfacique à travers la région de diffusion d'air (4) de sorte qu'à la fois, la sortie de dégivrage (6) et la région de diffusion d'air (4) réalisent une diffusion d'air à faible débit surfacique.

2. Installation selon la revendication 1, **caractérisée en ce que** dans la deuxième position (II), ladite diffusion d'air par la région de dégivrage (6) présente un débit surfacique sensiblement égal au débit surfacique de la région de diffusion d'air (4).

3. Installation selon une des revendications 1 ou 2, **caractérisée en ce qu'**au moins un élément de répartition (20, 30) présente également une troisième position (III) dans laquelle il obture l'alimentation en air de la région de dégivrage.

4. Installation de chauffage et/ou climatisation comportant au moins une région dite de dégivrage (6) jouxtant au moins une région de diffusion d'air (4) à faible débit surfacique, ainsi qu'au moins un élément de répartition d'air (7, 30, 31) entre la région de dégivrage (6) et la région de diffusion d'air (4) et qui présente au moins une première position d'obturation de la région de diffusion d'air (4) et au moins une deuxième position d'obturation de la région de dégivrage (6),
**caractérisée en ce que** l'élément de répartition d'air (7, 30, 31) est perforé et/ou poreux, de sorte que, lorsqu'il est placé dans ladite deuxième position d'obturation, le débit surfacique à travers la région de dégivrage (6) corresponde à un faible débit surfacique, de sorte que la région de dégivrage (6) et la région de diffusion d'air (4) réalisent une diffusion d'air à faible débit surfacique.

5. installation selon la revendication 4, **caractérisée en ce que**, lorsque l'élément de répartition d'air (7, 30, 31) est placé dans ladite deuxième position d'obturation, le débit surfacique à travers l'élément de répartition (7, 31) est sensiblement égal au débit surfacique la région de diffusion d'air (4).

6. Installation selon une des revendications précédentes, **caractérisée en ce que** ladite région de dégivrage (6) est une ouverture ménagée dans une paroi interne du véhicule, et **en ce que** ladite région de diffusion d'air (4) est un élément de diffusion d'air fixe par rapport à ladite paroi du véhicule.

7. Installation selon une des revendications précédentes, **caractérisée en ce que** la région de diffusion d'air (4) longe la région de dégivrage (6) sur au moins une partie de sa longueur.

8. Installation selon une des revendications précédentes, **caractérisée en ce que** la région de dégivrage (6) est disposée entre la région de diffusion d'air (4) et un vitrage (2) ou est entouré par la région de diffusion d'air (4).

9. Installation selon la revendication précédente, **caractérisée en ce que** la région de diffusion d'air (4) est disposé entre la région de dégivrage (6) et ledit vitrage (2).

10. Installation selon une des revendications précédentes, **caractérisée en ce que** l'élément de répartition d'air est un volet de répartition d'air (7,30).

11. Installation selon la revendication 10, **caractérisée en ce qu'**au moins le volet de répartition d'air (7) est articulé autour d'un axe situé sur une ligne de jonction (22) entre la région de dégivrage (6) et la région de diffusion d'air (4).

12. Installation selon une des revendications 1 à 9, **caractérisée en ce que** la région de répartition d'air est déplaçable par translation en face desdits régions de dégivrage (6) et de diffusion d'air (5)

13. Installation selon la revendication 12, **caractérisée en ce que** l'élément de répartition d'air présente :
- au moins une ouverture (104) correspondant au contour de la région de dégivrage (6) pour assurer un dégivrage et/ou désembuage ;
- au moins une zone (103) de diffusion d'air à faible débit surfacique pour assurer une diffusion à faible débit surfacique à travers la région de diffusion d'air (5) et/ou la région de dégivrage (6).

14. Installation selon la revendication 13, **caractérisée en ce que** l'élément de répartition d'air présente au moins une zone non perméable (102) ménagée entre l'ouverture (104) et ladite zone (103) de diffusion d'air.

15. Installation selon une des revendications 12 à 14, **caractérisée en ce que** l'élément de répartition d'air, déplaçable par translation, est un film (41, 100) couplé à des rouleaux (40) de distribution pour permettre ledit déplacement.

## Claims

1. Heating and/or air-conditioning installation comprising at least one de-icing outlet (6) having at least one de-icing region (6) juxtaposed with at least one region (4) for diffusing air at a low surface rate, as well as at least one element (7, 30, 31) for distributing air between the de-icing region (6) and the air diffusion region (4),
the air distribution element (7, 30, 31) having at least two positions, namely:
- a first position (I) in which it closes off the air supply to the air diffusion region (4) in order to provide de-icing and/or demisting of a window (2),
- a second position (II), **characterised in that**, in the second position (II), the air distribution element (7, 30, 31) partially closes off the air supply to the de-icing region (6) so that the surface rate through the de-icing region (6) corresponds to a diffusion at a low surface rate, whilst providing a diffusion of air at a low surface rate through the air diffusion region (4) so that, at the same time, the de-icing outlet (6) and the air diffusion region (4) effect a diffusion of air at a low surface rate.

2. Installation according to claim 1, **characterised in that**, in the second position (II), said diffusion of air through the de-icing region (6) has a surface rate substantially equal to the surface rate of the air diffusion region (4).

3. Installation according to one of claims 1 or 2, **characterised in that** at least one distribution element (20, 30) also has a third position (III) in which it closes off the air supply to the de-icing region.

4. Heating and/or air-conditioning installation comprising at least one so-called de-icing region (6) juxtaposed with at least one region (4) for the diffusion of air at a low surface rate, as well as at least one element (7, 30, 31) for distribution air between the de-icing region (6) and the air diffusion region (4) and which has at least a first position of closing off the air diffusion region (4) and at least a second position of closing off the de-icing region (6),
**characterised in that** the air distribution element (7, 30, 31) is perforated and/or porous so that, when it is placed in said second closure position, the surface rate through the de-icing region (6) corresponds to a low surface rate, so that the de-icing region (6) and the air diffusion region (4) effect a diffusion of air at a low surface rate.

5. Installation according to claim 4, **characterised in that**, when the air distribution element (7, 30, 31) is placed in said second closure position, the surface rate through the distribution element (7, 31) is substantially equal to the surface rate of the air diffusion region (4).

6. Installation according to one of the preceding claims, **characterised in that** said de-icing region (6) is an opening provided in an internal wall of the vehicle, and **in that** said air diffusion region (4) is an air diffusion element fixed with respect to said wall of the vehicle.

7. Installation according to one of the preceding claims, **characterised in that** the air diffusion region (4) runs along the de-icing region (6) over at least part of its length.

8. Installation according to one of the preceding claims, **characterised in that** the de-icing region (6) is disposed between the air diffusion region (4) and a window (2) or is surrounded by the air diffusion region (4).

9. Installation according to the preceding claim, **characterised in that** the air diffusion region (4) is disposed between the de-icing region (6) and said window (2).

10. Installation according to one of the preceding claims, **characterised in that** the air distribution element is an air distribution flap (7, 30).

11. Installation according to claim 10, **characterised in that** at least the air distribution flap (7) is articulated about an axis situated on a junction line (22) between the de-icing region (6) and the air diffusion region (4).

12. Installation according to one of claims 1 to 9, **characterised in that** the air distribution region is movable by translation opposite said de-icing (6) and air diffusion (5) regions.

13. Installation according to claim 12, **characterised in that** the air distribution element has:
- at least one opening (104) corresponding to the contour of the de-icing region (6) in order to provide de-icing and/or demisting;
- at least one zone (103) for diffusion of air at a low surface rate in order to provide diffusion at a low surface rate through the air diffusion region (5) and/or the de-icing region (6).

14. Installation according to claim 13, **characterised in that** the air distribution element has at least one non-permeable zone (102) provided between the opening (104) and the said air diffusion zone (103).

15. Installation according to one of claims 12 to 14, **characterised in that** the air distribution element, movable by translation, is a film (41, 100) coupled to distribution rollers (40) to allow said movement.

## Patentansprüche

1. Heizungs- und/oder Klimatisierungsanlage, umfassend mindestens einen Entfrostungsaustritt (6), der mindestens einen Entfrostungsbereich (6) aufweist, der an mindestens einen Luftausströmungsbereich mit geringem flächenbezogenem Durchsatz (4) angrenzt, sowie mindestens ein Luftmassenverteilungselement (7, 30, 31) zwischen dem Entfrostungsbereich (6) und dem Luftausströmungsbereich (4),
wobei das Luftmassenverteilungselement (7, 30, 31) mindestens zwei Positionen aufweist, nämlich Folgende:
- eine erste Position (I), in der es die Luftzufuhr des Luftausströmungsbereiches (4) verschließt, um eine Entfrostung und/oder eine Beschlagentfernung einer Verglasung (2) zu gewährleisten,
- eine zweite Position (II),
**dadurch gekennzeichnet, dass** in der zweiten Position (II) das Luftmassenverteilungselement (7, 30, 31) die Luftzufuhr des Entfrostungsbereiches (6) teilweise verschließt, sodass der flächenbezogene Durchsatz durch den Entfrostungsbereich (6) einer Ausströmung mit geringem flächenbezogenem Durchsatz entspricht, wobei gleichzeitig eine Luftausströmung mit geringem flächenbezogenem Durchsatz durch den Luftausströmungsbereich (4) gewährleistet wird, sodass der Entfrostungsaustritt (6) und der Luftausströmungsbereich (4) gleichzeitig eine Luftausströmung mit geringem flächenbezogenem Durchsatz ausführen.

2. Anlage nach Anspruch 1, **dadurch gekennzeichnet, dass** in der zweiten Position (II) die Luftausströmung durch den Entfrostungsbereich (6) einen flächenbezogenen Durchsatz aufweist, der im Wesentlichen gleich ist wie der flächenbezogene Durchsatz des Luftausströmungsbereiches (4).

3. Anlage nach einem der Ansprüche 1 oder 2, **dadurch gekennzeichnet, dass** mindestens ein Verteilungselement (20, 30) ebenfalls eine dritte Position (III) aufweist, in der es die Luftzufuhr des Entfrostungsbereiches verschließt.

4. Heizungs- und/oder Klimatisierungsanlage, umfassend mindestens einen so genannten Entfrostungsbereich (6), der an mindestens einen Luftausströmungsbereich (4) mit geringem flächenbezogenem Durchsatz angrenzt, sowie mindestens ein Luftmassenverteilungselement (7, 30, 31) zwischen dem Entfrostungsbereich (6) und dem Luftausströmungsbereich (4), das mindestens eine erste Position zum Verschluss des Luftausströmungsbereiches (4) und mindestens eine zweite Position zum Verschluss des Entfrostungsbereiches (6) aufweist,
**dadurch gekennzeichnet, dass** das Luftmassenverteilungselement (7, 30, 31) perforiert und/oder porös ist, sodass, wenn es sich in der zweiten Verschlussposition befindet, der flächenbezogene Durchsatz durch den Entfrostungsbereich (6) einem geringen flächenbezogenen Durchsatz entspricht, sodass der Entfrostungsbereich (6) und der Luftausströmungsbereich (4) eine Luftausströmung mit geringem flächenbezogenem Durchsatz ausführen.

5. Anlage nach Anspruch 4, **dadurch gekennzeichnet, dass**, wenn sich das Luftmassenverteilungselement (7, 30, 31) in der zweiten Verschlussposition befindet, der flächenbezogene Durchsatz durch das Verteilungselement (7, 31) im Wesentlichen gleich ist wie der flächenbezogene Durchsatz des Luftausströmungsbereiches (4).

6. Anlage nach einem der vorhergehenden Ansprüche, **dadurch gekennzeichnet, dass** der Entfrostungsbereich (6) eine Öffnung ist, die auf einer Innenwand des Fahrzeugs eingerichtet ist, und dadurch, dass der Luftausströmungsbereich (4) ein in Bezug auf die Wand des Fahrzeugs festsitzendes Luftausströmungselement ist.

7. Anlage nach einem der vorhergehenden Ansprüche, **dadurch gekennzeichnet, dass** der Luftausströmungsbereich (4) mindestens auf einem Teil seiner Länge entlang des Entfrostungsbereiches (6) verläuft.

8. Anlage nach einem der vorhergehenden Ansprüche, **dadurch gekennzeichnet, dass** der Entfrostungsbereich (6) zwischen dem Luftausströmungsbereich (4) und einer Verglasung (2) angeordnet oder vom Luftausströmungsbereich (4) umgeben ist.

9. Anlage nach dem vorhergehenden Anspruch, **dadurch gekennzeichnet, dass** der Luftausströmungsbereich (4) zwischen dem Entfrostungsbereich (6) und der Verglasung (2) angeordnet ist.

10. Anlage nach einem der vorhergehenden Ansprüche, **dadurch gekennzeichnet, dass** das Luftmassenverteilungselement eine Luftmassenverteilungsklappe (7, 30) ist.

11. Anlage nach Anspruch 10, **dadurch gekennzeichnet, dass** mindestens die Luftmassenverteilungsklappe (7) gelenkig um eine Achse gelagert ist, die sich auf einer Verbindungslinie (22) zwischen dem Entfrostungsbereich (6) und dem Luftausströmungsbereich (4) befindet.

12. Anlage nach einem der Ansprüche 1 bis 9, **dadurch gekennzeichnet, dass** der Luftmassenverteilungsbereich gegenüber den Entfrostungs- (6) und Luftausströmungsbereichen (5) verschiebbar ist.

13. Anlage nach Anspruch 12, **dadurch gekennzeichnet, dass** das Luftmassenverteilungselement Folgendes aufweist:
- mindestens eine Öffnung (104), die dem Umriss des Entfrostungsbereiches (6) entspricht, um eine Entfrostung und/oder Beschlagentfernung zu gewährleisten;
- mindestens eine Luftausströmungszone (103) mit geringem flächenbezogenem Durchsatz, um eine Ausströmung mit geringem flächenbezogenem Durchsatz durch den Luftausströmungsbereich (5) und/oder den Entfrostungsbereich (6) zu gewährleisten.

14. Anlage nach Anspruch 13, **dadurch gekennzeichnet, dass** das Luftmassenverteilungselement mindestens eine undurchlässige Zone (102) aufweist, die zwischen der Öffnung (104) und der Luftausströmungszone (103) eingerichtet ist.

15. Anlage nach einem der Ansprüche 12 bis 14, **dadurch gekennzeichnet, dass** das verschiebbare Luftmassenverteilungselement eine Folie (41, 100) ist, die an Verteilungsrollen (40) gekoppelt ist, um die Verschiebung zu ermöglichen.
